# EUROPÄISCHE PATENTANMELDUNG

(11) **EP 0 563 612 A2**
(43) Veröffentlichungstag der Anmeldung: **06.10.1993**
(21) Anmeldenummer: 93103483.9
(22) Anmeldetag: 04.03.1993
(51) Int. Cl.: G06F 11/22

(54) **Verfahren zum Lokalisieren von Fehlern in elektronischen Steuereinheiten**

(30) Priorität: 30.03.1992 DE 4210408
(71) Anmelder: SIEMENS AKTIENGESELLSCHAFT, D-80333 München (DE)
(72) Erfinder: Koeninger, Reinhard, Dipl.-Ing., W-4650 Gelsenkirchen (DE); Gericke, Harald, W-4200 Oberhausen (DE); Fischer, Peter, Dipl.-Inform., W-5810 Witten (DE)

(57) **Zusammenfassung**

Zum Lokalisieren und zum Beseitigen von Fehlern in elektronischen Steuereinheiten (K), die mit einer Zentralstelle (Z) verbunden sind ist in der Zentralstelle (Z) ein Fehlerprogramm (FP) vorgesehen, das in Zusammenarbeit mit einer Zentraldatei (ZD) Anweisungen zum Beseitigen der Fehler an die Steuereinheiten (K) abgibt. Von den Steuereinheiten (K) werden im Dialogbetrieb Fehlermeldungen (F) abgefragt und unter Verwendung von Hilfsprogrammen (HP) in der Zentralstelle (Z) ausgewertet. Falls die Zentralstelle (Z) einen Fehler nicht lokalisieren kann, wird eine entsprechende Information an eine dezentrale Stelle (D) weitergeleitet. Die Hilfsprogramme (HP) arbeiten mit Hilfsdateien (HD) zusammen und geben Anweisungen zur Fehlerverfolgung und/oder Baugruppentausch an die Steuereinheiten (K) ab. Als Steuereinheiten (K) sind vorzugsweise Kommunikationsanlagen für den Fernsprech- und/oder Datenverkehr vorgesehen.

## Beschreibung

Die Erfindung bezieht sich auf ein Verfahren zum Lokalisieren von Fehlern in elektronischen Steuereinheiten, insbesondere in Kommunikationsanlagen für den Fernsprech- und/oder Datenverkehr.

In modernen programmgesteuerten Kommunikationsanlagen sind üblicherweise Steuereinheiten vorgesehen, die die Übertragung und die Vermittlung von Sprach- und/oder Datensignalen steuern. Derartige Steuereinheiten enthalten eine Vielzahl von Bauteilen, insbesondere elektronischen Bauteilen, die auf einzelnen Baugruppen zusammengefaßt sind. Der Ausfall eines derartigen Bauteils hat häufig eine fehlerhafte Funktionsweise der Baugruppe und damit der gesamten Kommunikationsanlage zur Folge. Für die Programmsteuerung enthält die Kommunikationsanlage ein Betriebsprogramm, das üblicherweise aus einer Vielzahl von Programmmodulen aufgebaut ist. Derartige Programmodule können, zumindest in der Erprobungsphase Fehler aufweisen, die ebenfalls zu einer Fehlfunktion der gesamten Anlage führen können.

Beim Auftreten eines Fehlers wird in der Kommunikationsanlage eine Fehlermeldung erzeugt und einer Bedienperson mitgeteilt. Eine derartige Fehlermeldung enthält beispielsweise eine Fehlerklasse und eine Fehlernummer. Die Fehlerklasse kann einer von der Anlage durchzuführenden Aufgabe (Task) zugeordnet sein, während die Fehlernummer einem Teil dieser Aufgabe zugordnet sein kann. Üblicherweise werden die Fehlermeldungen an eine zentrale Stelle übertragen und häufig sind Rückfragen zum Fehlerbild und der Anlagenkonfiguration notwendig, um den Fehler eindeutig identifizieren zu können und Hinweise für dessen Beseitigung geben zu können. Dieses Verfahren ist oft sehr zeitraubend, was sich insbesondere bei der Verwendung im Zusammenhang mit Kommunikationsanlagen nachteilig erweist, da diese möglichst immer betriebsbereit sein sollten.

Der Erfindung liegt daher die Aufgabe zugrunde, ein Verfahren anzugeben, unter dessen Verwendung ein Fehler in einer elektronischen Steuereinheit aufgrund einer Fehlermeldung sehr schnell lokalisiert und damit beseitigt werden kann.

Erfindungsgemäß wird die Aufgabe bei dem Verfahren der eingangs genannten Art durch die im kennzeichnenden Teil des Patentanspruchs 1 angegebenen Merkmale gelöst.

Bei dem Verfahren gemäß der Erfindung wird mit einem Fehlerprogramm, das in einer zentralen Verarbeitungseinheit gespeichert ist im Dialogbetrieb die Fehlermeldung abgefragt, die die Fehlerklasse und die Fehlernummer enthält. Mit diesen Angaben wird einerseits die Bedeutung des Fehlers ermittelt und andererseits werden Hilfsprogramme aufgerufen, die angeben, wie der Fehler einzugrenzen und gegebenenfalls zu beseitigen ist.

Falls ein Fehler an mehreren Steuereinheiten nacheinander auftritt, überprüft die zentrale Verarbeitungseinheit, welche Maßnahmen bereits früher zu einer erfolgreichen Beseitigung eines derartigen Mehrfachfehlers geführt haben und teilt diese Maßnahmen der Kommunikationsanlage mit. Diese Maßnahmen sind insbesondere Signalverfolgungsdaten für eine Fehlereingrenzung in der Steuereinheit oder Angaben, die eine fehlerhafte Baugruppe kennzeichnen.

Die Durchführung des Verfahrens gemäß der Erfindung wird im folgenden anhand von Zeichnungen näher erläutert. Es zeigen:
- Figur 1: ein Blockbild einer Komnfiguration von mehreren mit einer Zentralstelle verbundenen Steuereinheiten, und
- Figur 2: eine schematische Darstellung eines Fehlerprogramms, das mit einer Zentraldatei zusammenwirkt.

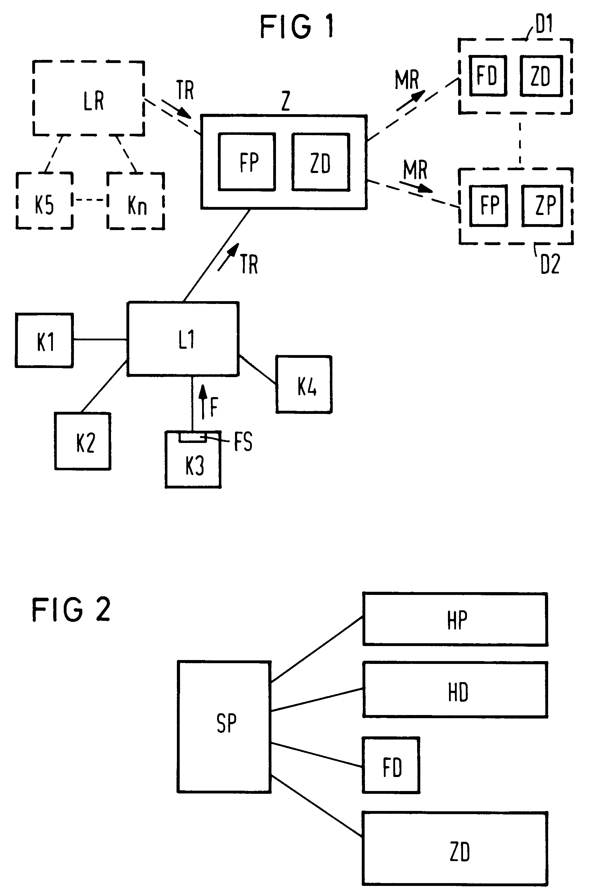

Das in Figur 1 dargestellte Blockbild zeigt mehrere als Kommunikationsanlagen K1 bis K4 ausgebildete Steuereinheiten, die beim Auftreten eines Fehlers entweder direkt oder unter Zwischenschaltung einer lokalen Stelle L1 mit einer Zentralstelle Z Daten über den Fehler im Dialogbetrieb austauschen können. Ein Fehler, der in einer der Kommunikationsanlagen K auftritt, wird üblicherweise durch die Übermittlung einer Fehlermeldung F, die eine Fehlerklasse und eine Fehlernummer anzeigt, an die lokale Stelle L1 mitgeteilt. Die Fehlerklasse ist beispielsweise einer von der Anlage K durchzuführenden Aufgabe (Task) zugeordnet, während die Fehlernummer einem Teil dieser Aufgabe zugeordnet ist. Die lokale Stelle L1 kann zur Fehlermeldung F zusätzliche Informationen hinzufügen, wie beispielsweise eine Nummer des Kunden bei dem die Anlage K steht, die Konfiguration der Anlage usw. Diese Informationen werden zusammen mit der Fehlermeldung F von der lokalen Stelle L1 als Nachricht TR zur Zentralstelle Z übertragen. Ähnliche Informationen können von weiteren Kommunikationsanlagen K5 bis Kn über weitere lokale Stellen L2 als Nachricht TR zur Zentralstelle Z gelangen.

In der Zentralstelle Z ist einerseits eine Zentraldatei ZD gespeichert, die die aktuellen Sourcen, d.h. die Gesamtheit aller in den Anlagen K1 bis Kn möglichen Programmodule beinhaltet. Andererseits ist dort ein zentrales Fehlerprogramm FP gespeichert, das unter Verwendung der Zentraldatei ZD die Lokalisierung der Fehler vornimmt und deren Beseitigung in den Anlagen K unterstützt.

Falls die Zentralstelle Z nicht ohne weiteres Anweisungen zur Lokalisierung und Beseitigung des Fehlers geben kann, gibt diese eine Nachricht MR an eine für diesen Fehler zuständige dezentrale Stelle D1 bis Dn, in der ebenfalls das Fehlerprogramm FP und die Zentraldatei ZD gespeichert sind. Diese dezentralen Stellen D sind beispielsweise Entwicklungsstellen, die die Kommunikationsanlagen K entwickelt haben und dort sind Experten vorhanden, die Anweisungen zur Eingrenzung und Beseitigung des Fehlers geben können. Die entsprechenden Anweisungen werden von den dezentralen Stellen D an die Zentralstelle Z und von dort zu der defekten Anlage K übertragen.

Das in Figur 2 dargestellte Schema zeigt das Fehlerprogramm FP, das ein Rahmenprogramm RP und mehrere Hilfsprogramme HP umfaßt. Das Rahmenprogramm RP bildet das Oberflächenprogramm und es arbeitet mit der Zentraldatei ZD, Hilfsdateien HD und einer Fehlerdatei FD zusammen.

Wenn ein Fehler in einer Kommunikationsanlage, beispielsweise der Kommunikationsanlage K3 auftritt, wird die Fehlermeldung F in einen Fehlerspeicher FS eingespeichert und einer Bedienperson angezeigt. Nach dem Herstellen der Verbindung zur lokalen Stelle L1 und zur Zentralstelle Z erzeugt das Fehlerprogramm FP in der Zentralstelle Z aus den in der Zentraldatei ZD gespeicherten Daten und aus der von der lokalen Stelle L1 übertragenen Nachricht TR die Anweisungen, die zur Lokalisierung und Beseitigung des Fehlers erforderlich sind. Um dies möglichst schnell durchführen zu können, sind die Hilfsdateien HD vorgesehen, die jeweils einer der Fehlerklassen zugeordnet sind und die unter Verwendung der Zentraldatei ZD immer auf den neuesten Stand gebracht und gehalten werden. Zu diesem Zweck vergleicht das Fehlerprogramm FP immer dann, wenn es aufgerufen wird, das letzte Änderungsdatum der aktuellen Zentraldatei ZD mit dem in der aktuellen Hilfsdatei HD gespeicherten Datum. Falls das Änderungsdatum neuer ist, wird mittels der Zentraldatei ZD eine neue Hilfsdatei HD erstellt. Falls beispielsweise in der Zentraldatei ZD 30 Fehlerklassen gespeichert sind, die jeweils bis zu 1500 Fehlernummern umfassen können, sind 30 Hilfsdateien HD vorgesehen. In der Zentralstelle Z sucht dann das Fehlerprogramm FP beim Auftreten eines Fehlers nur noch innerhalb der zugeordneten Hilfsdatei HD nach der Fehlernummer, wodurch sich eine sehr große Zeitersparnis gegenüber dem Durchsuchen der gesamten Zentraldatei ZD nach einem Fehlermuster ergibt.

In der Hilfsdatei HD ist angegeben, was der jeweilige Fehler bedeutet. Diese Bedeutung wird der Zentraldatei ZD entnommen. Gegebenenfalls ist in der Hilfsdatei HD auch angegeben, welche Maßnahmen zur Beseitigung des Fehlers unternommen werden müssen. Jeder Hilfsdatei HD ist hierzu ein Hilfsprogramm HP zugeordnet, das Maßnahmen für die Fehlereingrenzung liefert. Hierzu gehören Daten für die Signal- oder Programmverfolgung oder für den Tausch von Bauelementen oder Baugruppen. Diese Daten werden an die Kommunikationsanlage K3 zurückübermittelt.

Weiterhin sucht das Fehlerprogramm FP aus der Zentraldatei ZD gegebenenfalls diejenigen Teile heraus, welche die Fehlermeldung F erzeugt haben. Beispielsweise wird das mit der Ausführung einer Aufgabe befaßte Modul identifiziert. Das Fehlerprogramm FP speichert die aufgetretenen Fehlermeldungen F in eine Fehlerdatei FD ein, die eine Historie zu den jeweiligen Fehlern erstellt. Damit kann beim Auftreten eines Fehlers in einer Anlage K Auskunft darüber gegeben werden, welche Fehlermeldungen F zu einem derartigen Fehler bereits vorliegen und ob das dem Fehler zugrundeliegende Problem schon zuvor einmal gelöst wurde. Auf diese Lösung kann dann zurückgegriffen werden, wodurch ebenfalls eine große Zeitersparnis erreicht wird.

## Patentansprüche

1. Verfahren zum Lokalisieren von Fehlern in elektronischen Steuereinheiten (K), wobei die Steuereinheiten (K) den Fehlern zugeordnete Fehlermeldungen (F) erzeugen, **gekennzeichnet** durch folgende Schritte:
a) eine Zntralstelle (Z) fragt nach dem Herstellen einer Verbindung zur Steuereinheit (K) die jeweilige Fehlermeldung (F) ab,
b) unter Verwendung eines in der Zentralstelle (Z) gespeicherten Fehlerprogramms (FP) und einer Zentraldatei (ZD) lokolisiert die Zentralstelle (Z) mittels der Fehlermeldung (F) den entsprechenden Fehler und gibt an die Steuereinheit (K) Anweisungen zu dessen Beseitigung ab, wobei jeweils einer Gruppe von Fehlermeldungen ein Hilfsprogramm (HP) und eine zugehörige Hilfsdatei (HD) zugeordnet ist.

2. Verfahren nach Anspruch 1, **dadurch gekennzeichnet,** daß die Verbindung zur Steuereinheit (K) über eine lokale Einheit (L) erfolgt, an der mehrere Steuereinheiten (K) angeschlossen sind.

3. Verfahren nach Anspruch 1 oder 2, **dadurch gekennzeichnet,** daß die Zentralstelle (Z) mit dezentralen Stellen (D) verbindbar ist, in denen ebenfalls das Fehlerprogramm (FP) und die Zentraldatei (ZD) speicherbar sind und in denen Fehlermeldungen (F) behandelt werden, die in der Zentralstelle (Z) nicht erfaßt sind.

4. Verfahren nach einem der Ansprüche 1 bis 3, **dadurchgekennzeichnet,** daß die Fehlermeldungen (F) jeweils eine Fehlerklasse und eine Fehlernummer umfassen, wobei die Fehlerklasse einer von der Steuereinheit (K) durchzuführenden Aufgabe und die Fehlernummer einem Teil dieser Aufgabe zugeordnet ist.

5. Verfahren nach einem der Ansprüche 1 bis 4, **dadurchgekennzeichnet,** daß die Abfrage der Fehlermeldungen (F) von der Steuereinheit (K) im Dialogbetrieb erfolgt.

6. Verfahren nach einem der Ansprüche 1 bis 5, **dadurch gekennzeichnet,** daß die Hilfsprogramme (HP) Fehlerverfolgungsdaten an die Steuereinheit (K) zur Fehlereingrenzung übertragen.

7. Verfahren nach einem der Ansprüche 1 bis 6, **dadurch gekennzeichnet,** daß die Hilfsprogramme (HP) Daten zur Steuereinheit (K) übertragen, die fehlerhafte Baugruppen kennzeichnen.

8. Verfahren nach einem der Ansprüche 1 bis 7, **dadurch gekennzeichnet,** daß das Fehlerprogramm (FP) aus der Zentraldatei (ZD) diejenigen Teile ermittelt, die die Fehlermeldung (F) bewirkt haben.

9. Verfahren nach einem der Ansprüche 1 bis 8, **dadurch gekennzeichnet**, daß das Fehlerprogramm (FP) beim Eintreffen einer Fehlermeldung (F) überprüft, ob eine gleiche Fehlermeldung (F) bereits zuvor aufgetreten ist.

10. Verfahren nach Anspruch 9, **dadurch gekennzeichnet,** daß das Fehlerprogramm (FP) beim Auftreten von Mehrfachfehlern an die Steuereinheit (K) eine bereits erprobte Anweisung zur bestmöglichen Fehlerbeseitigung überträgt.

11. Verfahren nach einem der Ansprüche 1 bis 10, **dadurch gekennzeichnet,** daß als Steuereinheit (K) eine Kommunikationsanlage für den Fernsprech- und/oder Datenverkehr verwendet wird.
